# EUROPÄISCHE PATENTSCHRIFT

(11) **EP 3 380 374 B1**
(45) Veröffentlichungstag und Bekanntmachung des Hinweises auf die Patenterteilung: **12.08.2020**
(21) Anmeldenummer: 16798479.8
(22) Anmeldetag: 18.11.2016
(51) Int. Cl.: B60T 13/14

(54) **BREMSGERÄT FÜR EINE HYDRAULISCHE KRAFTFAHRZEUGBREMSANLAGE**
BRAKE DEVICE FOR HYDRAULIC BRAKE SYSTEM
APPAREIL DE FREINAGE POUR SYSTÈME DE FREIN HYDRAULIQUE

(30) Priorität: 23.11.2015 DE 102015223048
(43) Veröffentlichungstag der Anmeldung: 03.10.2018
(73) Patentinhaber: Continental Teves AG & Co. OHG, 60488 Frankfurt am Main (DE)
(72) Erfinder: GONZALEZ, Jose, 32549 Bad Oeynhausen (DE); KREH, Heinrich, 61197 Florstadt (DE); MESSNER, Adrian, 64285 Darmstadt (DE); RÜFFER, Manfred, 65843 Sulzbach (DE); WIEBE, Paul, 64331 Weiterstadt (DE); PETZOLD, Falk, 60489 Frankfurt/M (DE); JÜRGING, Michael, 65779 Kelkheim (DE); TOQUERO, Ricardo, 60316 Frankfurt am Main (DE); SCHIEL, Lothar, 65719 Hofheim (DE); DRUMM, Stefan, 55291 Saulheim (DE)
(86) Internationale Anmeldenummer: PCT/EP2016/078116
(87) Internationale Veröffentlichungsnummer: WO 2017/089234

(56) Entgegenhaltungen:
- DE-A1- 4 012 958
- FR-A1- 2 343 630
- FR-A1- 2 573 019
- GB-A- 2 125 498
- US-A- 3 967 538

## Beschreibung

Die Erfindung betrifft ein Bremsgerät für eine hydraulische Kraftfahrzeugbremsanlage mit einer hydraulischen Verstärkerstufe und einem Hauptbremszylinder, die manuell mit einem Bremspedal betätigbar ist.

Bei Bremssystemen für hydraulische Kraftfahrzeugbremsanlagen gelten konventionelle Bremsgeräte mit Unterdruck - Bremskraftverstärkern, hydraulischem Tandem - Hauptbremszylindern und einer nachgeschalteten elektronisch geregelten Modulatoreinheit für fahrdynamische Regelfunktionen nach wie vor als besonders leicht, kostengünstig, einfach herstellbar und die komfortabelsten Pedalgefühl und Ansprechcharakteristik aufweisend. Bei stetig zunehmenden Anforderungen an ein automatisiertes, computergesteuertes Fahren und Bremsen und gleichzeitig knapper verfügbares Bauraum stoßen die groß bauenden Unterdruck-Bremskraftverstärker an ihre technischen Grenzen.

Es werden daher Bremsgeräte mit kompakteren hydraulischen Verstärkerstufen eingesetzt. Bekannte Bremsgeräte mit hydraulischen Verstärkerstufen sind jedoch meist sehr komplex aufgebaut, sind an schwere und teure Hochdruckspeicher als Druckquelle angewiesen, benötigen oft spezielle, gesonderte, mit konventionellen Systemen inkompatible Befestigungsschnittstellen und sind zudem in ihrer Ansprechcharakteristik verbesserungswürdig. Stellvertretend für eine derartige Technologie wird auf ein Aggregat gemäß FR 2 573 019 A1 und DE 40 12 958 A1 verwiesen.

Es stellt sich somit eine Aufgabe, ein verbessertes Bremsgerät mit einer hydraulisch wirkenden Verstärkerstufe anzubieten. Dieses soll mit einfachsten Mittel zu minimalen Kosten dargestellt werden und mit einem konventionellen Unterdruck-Bremskraftverstärker möglichst vergleichbare Komfort und Schnittstellen aufweisen.

Die Aufgabe wird erfindungsgemäß durch ein Bremsgerät mit Merkmalskombination nach dem Anspruch 1 gelöst. Unteransprüche zusammen mit Figurenbeschreibungen geben weitere vorteilhafte Ausführungsformen und Weiterbildungen an.
Das erfindungsgemäße Bremsgerät verfügt über eine hydraulische Verstärkerstufe, die energieeffizient nach einem Umlaufprinzip unmittelbar direkt von einer Motorpumpeneinheit gespeist wird, so dass kein externer Hochdruckspeicher benötigt ist.
Das System lässt sich modular aufbauen, mit unterschiedlichen Hauptbremszylindern, Motorpumpeneinheiten und nachgeschalteten Modulatoreinheiten kombinieren, zudem an bereits vorhandenen Befestigungsschnittstellen im Fahrzeug einsetzten, auch im Austausch mit Unterdruck-Bremskraftverstärkern. Hierdurch können vielfältige kundenspezifische Charakteristika mit Variationen des erfindungsgemäßen Bremsgeräts abgebildet und seine Integration in bestehende Systeme vereinfacht werden.
Das erfindungsgemäße Bremsgerät ist mittels Sensoreinrichtungen zur Erfassung von Bewegung der Kolbenstange und Druck im Druckraum voll überwachbar und für softwaregestützte, regelbasierte Fremdbetätigung und autonomes Fahren geeignet.
Eine vollautomatisierte fahrerunabhängige Bremsung kann bei dem erfindungsgemäßen Bremsgerät sehr einfach durch schließen eines elektrisch steuerbaren Sperrventils in einer Rücklauf leitung zum Druckmittelbehälter eingeleitet werden.
In Zusammenspiel mit einer nachgeschalteten Modulatoreinheit wie beispielsweise einem ESP-Modul kann die Modulatoreinheit durch das Bremsgerät mit einem definierten Hydraulikdruck vorgeladen werden, wodurch die Hydraulikpumpe der Modulatoreinheit entlastet und Bremsweg dennoch verkürzt werden kann.
Der Einsatz einer elastischen Reaktionsscheibe zwischen der Kolbenstange und dem Druckkolben stellt eine haptisch komfortable Rückmeldung am Bremspedal sicher, und ermöglicht insbesondere bei Verwendung eines Übersetzungsstücks zwischen der Kolbenstange und der Reaktionsscheibe eine kundenspezifisch in weitem Bereich einstellbare Ansprechcharakteristik.
Der kompakte, weitestgehend koaxiale Aufbau in Zusammenspiel mit einer externen Motorpumpeneinheit und Vermeidung von einem Hochdruckspeicher führt zu einer erheblichen Reduzierung von Bauteilen, Bauraum, Gewicht, Herstell- und Montageaufwand und Kosten.

Weitere Merkmale und Vorteile der Erfindung ergeben sich aus der nachfolgenden Beschreibung mehrerer erfindungsgemäßer Ausführungsbeispiele und den Zeichnungen. Komponenten und Merkmale unterschiedlicher Ausführungsformen mit gleichen Funktionen werden hierbei vorzugsweise mit gleichen Bezugszeichen versehen. Nachstehend zeigt:
Fig.1 eine erfindungsgemäße Ausführungsform des Bremsgeräts in räumlicher Ansicht.
Fig.2 die gleiche Ausführungsform in Frontalansicht.
Fig.3 eine stark vereinfachte Längsschnitt-Darstellung einer erfindungsgemäßen Ausführungsform in Lösestellung beziehungsweise unbestätigter Ausgangsstellung.
Fig.4 ein Bremsgerät nach der Fig.3 bei einer fahrerunabhängigen Fremdansteuerung.
Fig.5 ein Bremsgerät nach Fig.3 bei einer normalen, mäßigen Betätigung durch den Fahrer mittels Bremspedals beziehungsweise manueller Betätigung.
Fig.6 ein Bremsgerät nach der Fig.3 bei einer intensiven Betätigung durch den Fahrer wie beispielsweise einer Notbremsung.
Fig.7 einen Teilbereich einer anderen erfindungsgemäßen Ausführungsform des Bremsgeräts in Längsschnitt bei manueller Betätigung, in einer Druckaufbauphase.
Fig.8 die Ausführung nach der Fig.7 in einem Rücklauf beziehungsweise Druckabbauphase.
Fig.9 eine weitere erfindungsgemäße Ausführungsform des Bremsgeräts in ungebremster Ausgangslage beziehungsweise Lösestellung.
Fig.10 einen Teilbereich einer weiteren erfindungsgemäßen Ausführungsform des Bremsgeräts mit einer Steuerhülse, in Längsschnitt.
Fig.11 einen Teilbereich einer weiteren erfindungsgemäßen Ausführungsform des Bremsgeräts mit Steuerhülse und Verriegelung mittels federbelasteten Kugel, in Längsschnitt.
Fig.12 einen Teilbereich einer weiteren erfindungsgemäßen Ausführungsform des Bremsgeräts mit Steuerhülse und Verriegelung mittels druckgesteuerten Arretierungskolbens, in Längsschnitt.

### Fig.1 und 2:

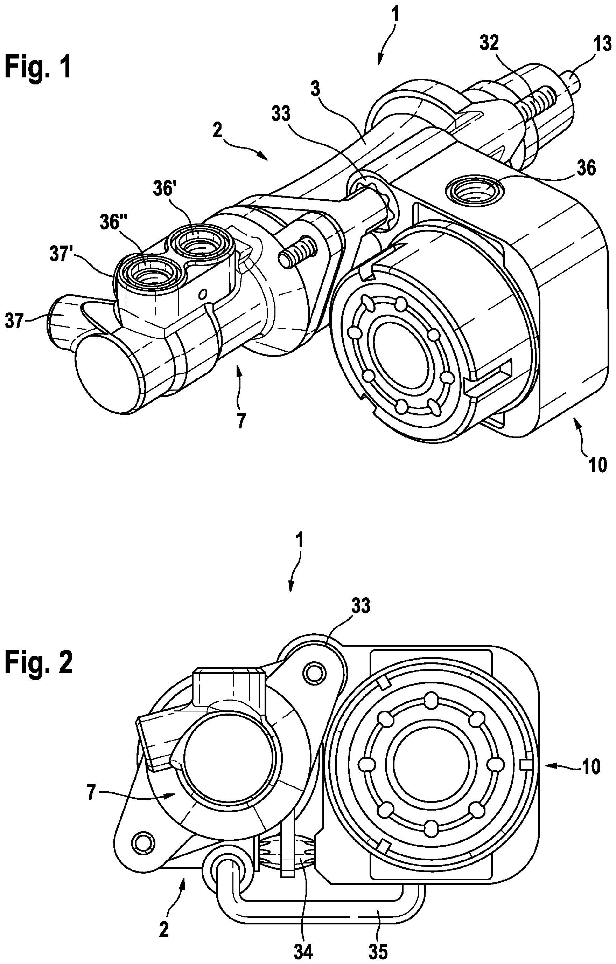

Eine erste Ausführungsform des erfindungsgemäßen Bremsgeräts 1 ist in den Fig.1 und 2 in Außenansichten dargestellt. Das Bremsgerät 1 ist modular aufgebaut und umfasst im Wesentlichen eine hydraulische Verstärkerstufe 2 mit einem Verstärkergehäuse 3, einen Hauptbremszylinder 7 und eine elektrisch angetriebene Motorpumpeneinheit 10

Die Verstärkerstufe 2 wird über eine axial verschiebbare Kolbenstange 13 von einem hier nicht gezeigten Bremspedal 15 gegebenenfalls unter Zwischenschaltung von weiteren üblichen, hier nicht gezeigten mechanischen Komponenten betätigt.

Die elektromotorisch angetriebene Motorpumpeneinheit 10 ist schwenkbar am Befestigungsbolzen 32 in einem elastischen Radialdämpfer 33 gelagert und unter Zwischenschaltung eines Axialdämpfers 34 gegen eine Befestigungsstelle am Verstärkergehäuse 3 gestützt und fixiert. Hierdurch werden Drehmomente der Motorpumpeneinheit 10 schwingungstechnisch optimal aufgenommen und isoliert.

Der Befestigungsbolzen 32 in der gezeigten Ausführungsform weist an beiden Enden ein Gewinde zu Montage einer Gewindemutter und dient zugleich zur Montage des Hauptbremszylinders 7 am Verstärkergehäuse 3 und zur Befestigung des gesamten Bremsgeräts 1 an einem nicht gezeigten karosseriefesten Fahrzeugteil wie beispielsweise einer Spritzwand im Motorraum.

Die Schnittstelle ist dabei vorzugsweise unifiziert mit weiteren Typen von Bremsgeräten ausgeführt - beispielsweise mit einem pneumatischen Bremskraftverstärker, wodurch ein Einsatz unterschiedlicher Bremsgerättypen am gleichen Fahrzeugtyp realisierbar ist.

Über die Behälteranschlüsse 36, 36', 36" wird der Hauptbremszylinder 7 und die Motorpumpeneinheit 10 von vorzugsweise einem einzelnen, gemeinsamen, in der Abbildung nicht dargestellten Druckmittelbehälter 11 gespeist. Ein Einsatz von mehreren separaten Druckmittelbehältern ist innerhalb der Erfindung jedoch jederzeit zulässig.

Über eine Hydraulikverbindung 35 wird das Druckmittel bei Bedarf im Bremsfall von der Motorpumpeneinheit 10 unmittelbar, unter Verzicht auf einen zwischengeschalteten Hochdruckspeicher der Verstärkerstufe 2 zugefügt, wo es sofort, "on demand", zur Aufbau einer auf den Hauptbremszylinder 7 einwirkenden Verstärkungskraft eingesetzt werden kann. Somit funktioniert die erfindungsgemäße Verstärkerstufe nach einem Umlaufprinzip beziehungsweise als ein Umlaufverstärker.

### Fig.3-6

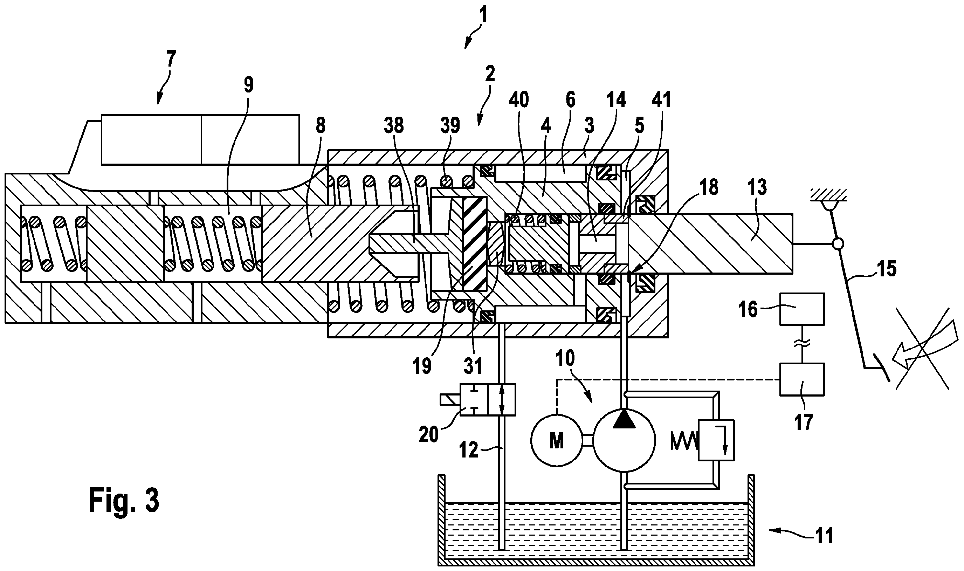

In den Figuren 3 bis 6 wird der Innenaufbau und Funktionsweise eine Ausführungsform des erfindungsgemäßen Bremsgeräts anhand einer stark vereinfachten Axialschnittdarstellung verdeutlicht. Im Verstärkergehäuse 3 der Verstärkerstufe 2 ist ein Verstärkerkolben 4 radial nach außen abdichtend axial verschiebbar geführt und stütz sich dabei gegen eine Rückstellfeder 39, die zum Rückstellen des Verstärkerkolbens 4 nach einem Bremsvorgang dient.

Der Verstärkerkolben 4 trennt in dem Verstärkergehäuse 3 einen Druckraum 5 von einer Rücklaufkammer 4 ab, die mit einem hydraulischen Druckmittel - beispielsweise Bremsflüssigkeit gefüllt sind.

Die Rücklaufkammer 6 ist über eine Rücklaufverbindung 12 mit einem drucklosen, beziehungsweise unter Atmosphärendruck stehendem Druckmittelbehälter 11 verbunden.

Eine durch ein Bremspedal 15 betätigbare Kolbenstange 13 ist in einer Mittelbohrung im Verstärkerkolben 4 relativ zum Verstärkerkolben 4 und zum Verstärkergehäuse 3 axial verschiebbar geführt. Durch die Kolbenstange 13 kann die unverstärkte Betätigungskraft vom Bremspedal 15 über ein druckstabiles Übersetzungsstück 31 in eine elastische Reaktionsscheibe 19 und von dort unter Bildung einer Hysterese in den Druckkolben 8 des Hauptbremszylinders 7 eingeleitet werden. Gleichzeitig leitet die Reaktionsscheibe 19 eine Reaktionskraft in die Kolbenstange 13 ein, die im Wesentlichen als haptische Rückmeldung beziehungsweise ein charakteristisches Pedalgefühl am Bremspedal 15 vom Fahrer registriert wird.

Durch Variationen von Durchmesser des Übersetzungsstücks 31 und seiner mit der Reaktionsscheibe 19 kontaktierenden Stirnseite kann die korrespondierende Wirkfläche und somit Reaktionskraft kraft- und wegabhängig beeinflusst werden. Damit lässt sich das Ansprechverhalten des Bremsgeräts und das Pedalgefühl sehr einfach bedarfsgerecht anpassen.

In der Kolbenstange 13 ist eine Hydraulikpassage 14 als eine Kombination aus Axial- und Querbohrungen ausgebildet. In Abhängigkeit von einer axialen Relativposition zwischen der Kolbenstange 13 und dem Verstärkerkolben 4 wird durch die Hydraulikpassage 14 eine hydraulische Verbindung zwischen der Rücklaufkammer 6 und dem Druckraum 5 ermöglicht.

Ein Anschlagelement 41 dient zur definierten Positionierung der Kolbenstange 13 im Verstärkergehäuse 3 in der unbetätigten Ausgangsposition beziehungsweise Lösestellung. Vorzugsweise kann das Anschlagelement 41 als ein Seegering ausgebildet sein, das in eine korrespondierende Umlaufnut an der Kolbenstange 13 eingesetzt ist. Jedoch sind weitere Ausführungen mit einer äquivalenten Funktionalität innerhalb der Erfindung ebenso zulässig.

In der gezeigten Ausführungsform ist die Kolbenstange 13 durch ein Federelement 40 axial gegen den Verstärkerkolben 4 vorgespannt gelagert, womit nicht nur das Ansprechverhalten und Pedalgefühl beeinflusst, sondern auch eine besonders exakte Ansteuerung des Bremsgeräts 1 ermöglicht wird. Eine federlose Korrelation zwischen den beiden Komponenten ist jedoch innerhalb der Erfindung ebenso zulässig.

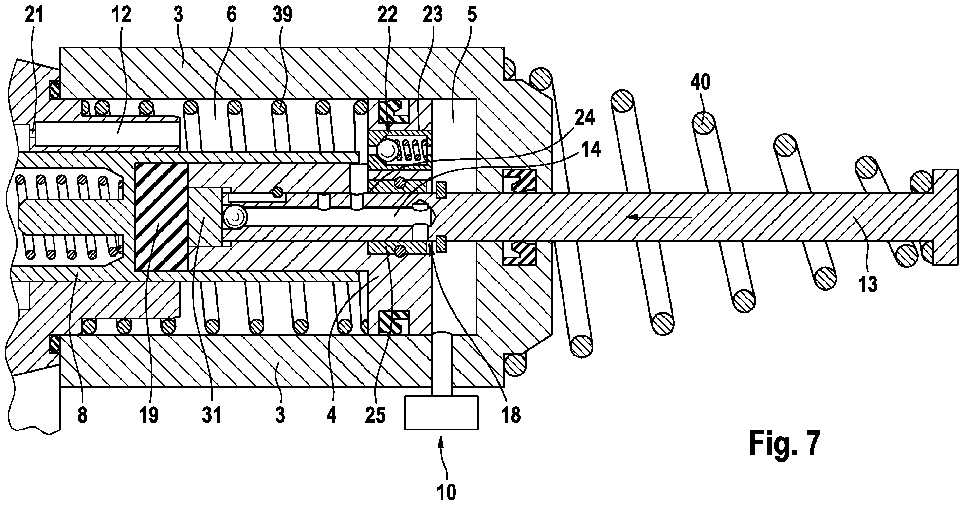

Das Federelement 40 kann innerhalb der Erfindung in anderen Ausführungen auch an andere Stellen verlagert und beispielsweise zwischen dem Verstärkergehäuse 3 und der Kolbenstange 13 oder zwischen der Kolbenstange 13 und einer gesonderten Steuerhülse 25 im Verstärkerkolben 4 angeordnet werden, wie insbesondere den Fig.7 bis 12 zu entnehmen ist.

Durch eine Sensoreinrichtung 16 wird die Lage und vorzugsweise auch die Lageveränderung der Kolbenstange 13 erfasst und an eine elektronische Steuereinheit 17 übermittelt, welche sie verarbeitet und elektrische Signale zur Ansteuerung der Motorpumpeneinheit 10 aussendet. Innerhalb der Erfindung ist es zulässig, die Kolbenstange 13 durch die Sensoreinrichtung 16 sowohl direkt zu überwachen, als auch indirekt - beispielsweise anhand der Überwachung des an die Kolbenstange 13 gekoppelten Bremspedals 15.

Die Motorpumpeneinheit 10 fördert nach ihrer Aktivierung das Druckmittel aus dem Druckmittelbehälter 11 in den Druckraum 5 und führt darin einen Druckaufbau herbei. Der Verstärkerkolben 4 verschiebt sich daraufhin in Richtung Hauptbremszylinder 7 und überträgt die aus dem Druckaufbau resultierende Verstärkungskraft an den Druckkolben 8 des Hauptbremszylinders 7, um in der Druckkammer 9 einen Bremsdruck zu erzeugen. In der gezeigten Ausführungsform geschieht das nicht direkt, sonder über ein gesondertes Druckstück 38, welches insbesondere als ein Adapter zur einfacheren Anpassung verschiedener Abmessungen am Druckkolben 8 und Verstärkerkolben 4 dienen kann. In anderen Ausführungsformen innerhalb der Erfindung kann auf ein derartiges Druckstück auch verzichtet werden.

In der gezeigten Ausführung ist ein konventioneller Hauptbremszylinder 7 nach Tandem-Bauart mit zwei jeweils mit Bremskreisen verbundenen Druckkammern und zwei verschiebbaren Kolben verwendet, jedoch können innerhalb der Erfindung selbstverständlich auch andere Hauptbremszylinder-Bauarten eingesetzt werden.

Die Fig.3 zeigt das Bremsgerät 1 in Lösestellung beziehungsweise in der unbestätigten Ausgangsstellung. Das Bremspedal ist dabei unbetätigt, die Motorpumpeneinheit 10 ist ausgeschaltet, das Sperrventil 20 hält die Rücklaufverbindung 12 offen, die Kolbenstange 13 und der Verstärkerkolben 4 befindet sich in ihren jeweiligen unbetätigten Ausgangsstellungen, so dass zwischen dem Druckraum 5 und der Rücklaufkammer 6 eine hydraulische Verbindung durch die Hydraulikpassage 14 besteht.

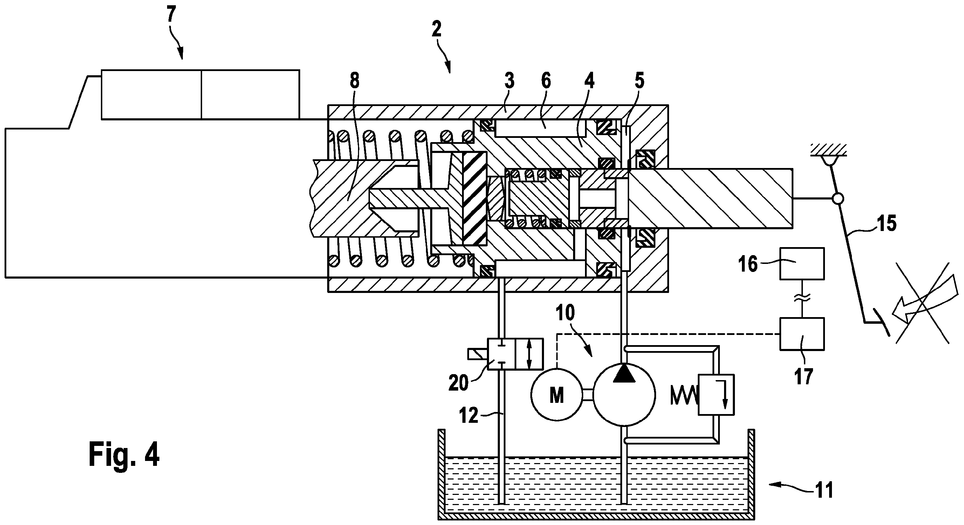

In der Fig.4 ist ein Zustand zur Beginn einer fremdangesteuerten, fahrerunabhängigen Bremsung dargestellt. Hierbei bleibt das Bremspedal 15 unbetätigt, das Sperrventil 20 ist geschlossen und die Rücklaufverbindung 12 damit unterbunden, die Motorpumpeneinheit 10 läuft durch die elektronische Steuereinheit 17 angesteuert und fördert das Druckmittel in den Druckraum 5. Das Druckmittel kann nicht über die Rücklaufverbindung 12 in den Druckmittelbehälter 11 abfließen, wodurch sich in dem Druckraum 5 Druck aufbaut, der zur Verschiebung des Verstärkerkolbens 4 in Richtung Hauptbremszylinder 7 führen wird.

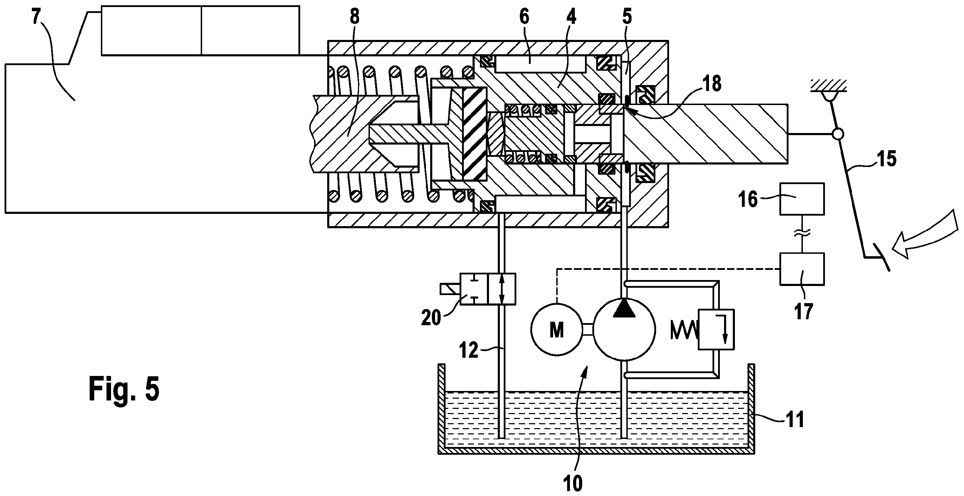

Im Unterschied zu der Fig.4 zeigt die Fig.5 eine reguläre, mäßig intensive fahrerinitiierte Bremsung.

Die Hydraulikpassage 14 weist eine erste Steuerkante 18 auf. Diese ist durch einen druckraumseitigen Außenrand einer druckraumseitigen Querbohrung in der Kolbenstange 13 ausgebildet, die ein Bestandteil der Hydraulikpassage 14 ist. Für eine genauere Darstellung sei hier an die Figuren 7 bis 12 verwiesen.

Das Sperrventil 20 ist offen und der Verstärkerkolben 4 befindet sich in seiner unbetätigten Ausgangslage.

Der Fahrer betätigt das Bremspedal 15 und verschiebt die Kolbenstange 13 relativ zum Verstärkerkolben 4 in Richtung Hauptbremszylinder 7. Die Verschiebung der Kolbenstange 13 wird durch die Sensoreinrichtung 16 erfasst, woraufhin die Motorpumpeneinheit 10 eingeschaltet wird und anfängt, das Druckmittel in den Druckraum 5 zu fördern. Zunächst kann eine geringe Volumenmenge des Druckmittels aus dem Druckraum 5 durch die Hydraulikpassage 14 in die Rücklaufkammer 6 und von dort durch die Rücklaufverbindung 12 zurück in den Druckmittelbehälter 11 entweichen. Dadurch wird ein abrupter ruckartiger Druckaufbau im Druckraum 5 vermieden.

Nach einem kurzen Verschiebeweg verschließt die Steuerkante 18 die Hydraulikpassage 14 und trennt dadurch den Druckraum 5 von der Rücklaufkammer 6 und dem Druckmittelbehälter 10 ab, so dass das Druckmittel nicht mehr aus dem Druckraum 5 abfließen kann, darin zu einem intensiven Druckaufbau kommt und der Verstärkerkolben 4 sich unter Ausübung der Verstärkungskraft auf den Druckkolben 8 verschiebt.

Die Reaktionsscheibe 19 wird durch die Verschiebung der Kolbenstange 13 komprimiert und erzeugt an der Kolbenstange 13 eine der Verschieberichtung entgegengesetzte Reaktionskraft und dadurch trotz einer indirekt, durch eine elektronisch angesteuerte Motorpumpeneinheit 10 erzeigten Verstärkungskraft ein für den Fahrer komfortables, "analoges" Pedalgefühl am Bremspedal 15.

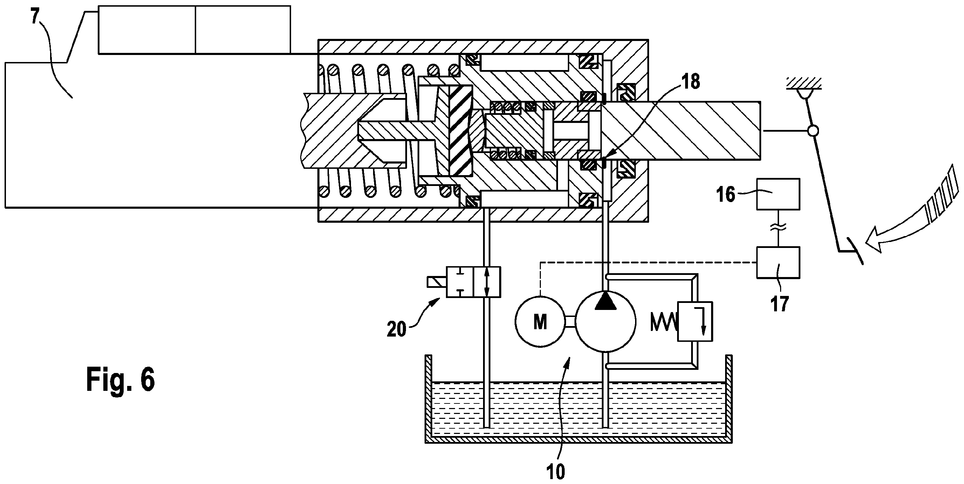

In der Fig.6 ist ein Zustand zu Beginn einer ebenfalls fahrerinitiierten, jedoch gegenüber der Fig.5 deutlich schnelleren und intensiveren Bremsung - beispielsweise einer Notbremsung gezeigt. Durch eine schnelle Verschiebung der Kolbenstange wird die Steuerkante 18 nahezu unmittelbar verschlossen, so dass es im Druckraum 5 sofort zu einem intensiven Druckaufbau kommt und durch Verkürzung der Systemreaktionszeit der Bremsweg reduziert wird. Die einhergehenden Komforteinbußen können dabei zugunsten der Sicherheit in Kauf genommen werden.

Fig.7 zeigt eine Schnittansicht eines Bereichs einer anderen erfindungsgemäßen Ausführungsform des Bremsgeräts 1 in einer Druckaufbauphase zu Beginn einer Bremsung.

Die Rücklaufverbindung 12 ist hierbei als ein gesonderter Kanal durch den Hauptbremszylinder 7 ausgebildet, der die Rücklaufkammer 6 der Verstärkerstufe 2 mit einem Behälteranschlüsse 36' des Hauptbremszylinder 7 und so mit einem daran angeschlossenen Druckmittelbehälter 11 verbindet.

Insbesondere bei extrem dynamischen Bremsvorgängen wird das Bremsgerät 1 bezüglich ausreichend schneller Volumenbereitstellung des Druckmittels im Druckraum 5 besonders stark gefordert, was als Konsequenz die Verwendung einer stärkeren und somit unerwünscht größeren und schwereren Motorpumpeneinheit 10 haben kann.

Um dies zu vermeiden sind in der Rücklaufverbindung 12 eine Drosselstelle 21 sowie zwischen der Rücklaufkammer 6 und dem Druckraum 5 eine Überströmeinrichtung 22 vorgesehen.

Die Drosselstelle 21 kann beispielsweise wie abgebildet als eine Engstelle in einem Hydraulikanal ausgebildet sein und ist derart ausgelegt, dass geringe definierte Volumenströme durch die Rücklaufverbindung 12, wie sie bei mäßigen Bremsungen entstehen, diese relativ ungehindert passieren können. Bei intensiven Bremsungen mit besonders schnellen Verschiebungen des Verstärkerkolbens 4 verursacht die Drosselstelle 21 jedoch in der Rücklaufkammer 6 einen Staudruck. Unterschreitet die Druckdifferenz zwischen der Rücklaufkammer 6 und dem Druckraum 5 einen definierten Wert, öffnet die Überströmeinrichtung 22 eine hydraulische Verbindung, so dass kurzzeitig ein Volumentransfer des Druckmittels von der Rücklaufkammer 6 nach Druckraum 5 durch die Überströmeinrichtung 22 und somit eine Zwangsbefüllung des Druckraumes 5 stattfindet, bevor die Motorpumpeneinheit 10 die erforderliche Volumenbreitstellung gewährleistet.

Die Überströmeinrichtung 22 ist in der gezeigten Ausführung als ein federbelastetes Überdruckventil ausgeführt, das in einer axialen Ausnehmung 23 im Verstärkerkolben 4 angeordnet ist. Andere hier nicht gezeigten Positionen für das Überdruckventil, beispielsweise in einem gesonderten Kanal im Verstärkergehäuse 3 sind innerhalb der Erfindung ebenso zulässig.

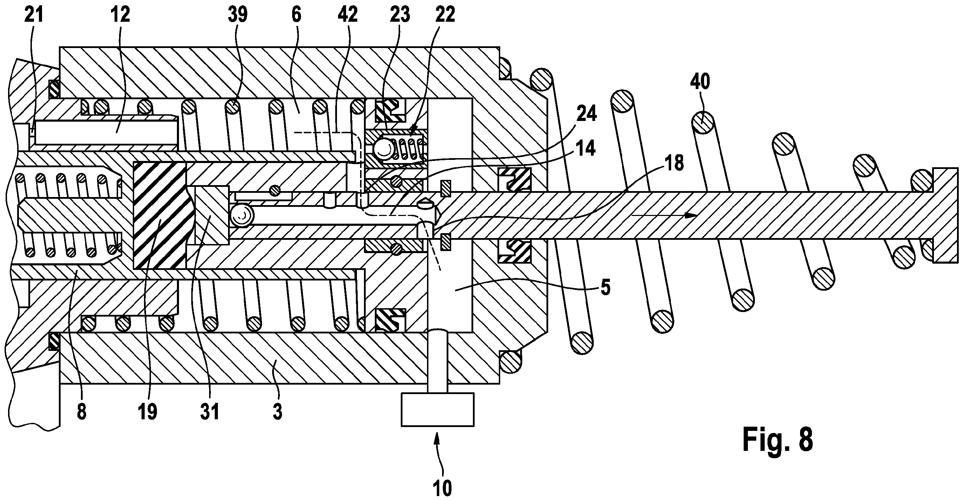

Fig.8 zeigt die Ausführung nach der Fig.7 in einer Druckhaltephase bei einer Bremsung. Herbei sei angemerkt, dass die Druckabbauphase nach einem Bremsvorgang eine prinzipiell ähnliche Zueinanderstellung der Komponenten darstellen würde.

In der Druckhaltephase befinden sich die Betätigungskraft an der Kolbenstange 13 und die Reaktionskraft an der Reaktionsscheibe 19 im Gleichgewicht. Dies bewirkt eine Relativverschiebung der Kolbenstange 13 gegenüber dem Verstärkerkolben 4 in einem Maße, dass die erste Steuerkannte 18 geöffnet wird und Druckmittel durch die Hydraulikpassage 14 aus dem Druckraum 5 in die Rücklaufkammer 6 und von dort durch die Rücklaufverbindung 12 in den Druckmittelbehälter 11 als Volumenstrom 42 entweichen kann. Die entweichende Menge des Druckmittels wird kontinuierlich durch die Motorpumpeneinheit 10 kompensiert, so dass der Verstärkerkolben 4 sich in einem axialen Kräftegleichgewicht befindet und in einer axialen Position ruhend verharrt.

Beim Druckabbau stoppt die Motorpumpeneinheit 10 und das Druckmittel entweicht aus dem Druckraum 5 in die Rücklaufkammer 6 auf dem gleichen Wege, bedingt durch die rückwärtige Verschiebung des Verstärkerkolbens 4 zusammen mit der Kolbenstange 13 und dem Druckkolben 8.

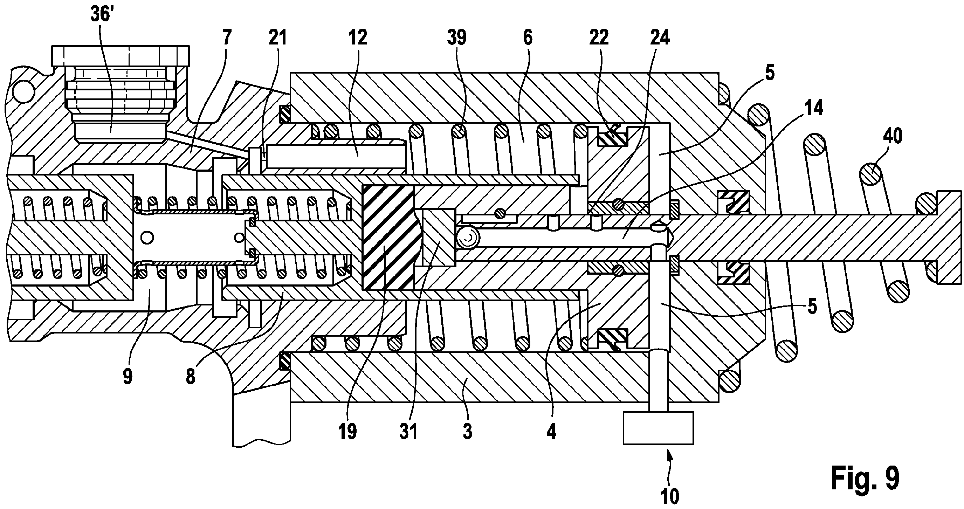

Bei einer weiteren Ausführungsform in der Fig.9 ist die Funktion der Überströmeinrichtung 22 besonders effizient und bauteilsparend in ein radiales Dichtelement zwischen dem Verstärkerkolben 4 und dem Verstärkergehäuse 3 integriert. Derartige Dichtelemente weisen üblicherweise zumindest eine radiale Dichtlippe auf, die an einer zylindrischen Oberfläche - im vorliegenden Fall einer Innenwand im Verstärkergehäuse 3 - abgleitet und ein Volumentransfer sperrt. Das Dichtelement am gezeigten erfindungsgemäßen Bremsgerät 1 ist derart ausgelegt, dass bei einem definierten Staudruck oder Druckdifferenz zwischen der Rücklaufkammer 6 und dem Druckraum 5 ein Volumentransfer von der Rücklaufkammer 6 nach Druckraum 5 stattfindet. Dies kann beispielsweise durch Umströmen der Dichtlippe in Richtung Druckraum 5 oder durch das druckabhängige Umklappen einer hierfür ausgelegten Dichtlippe erfolgen.

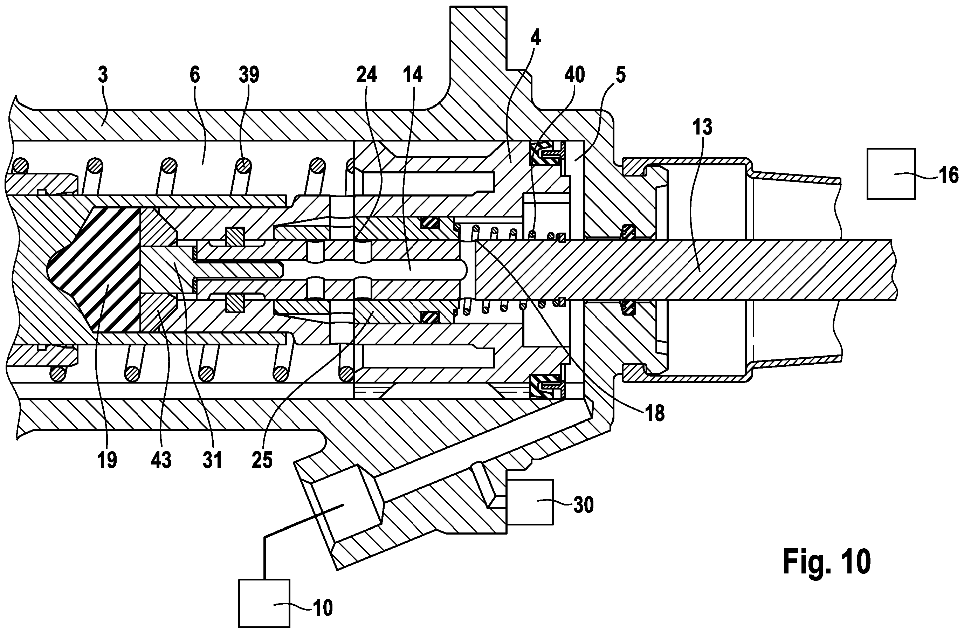

Fig. 10 zeigt eine weitere Ausführungsform des Bremsgeräts 1, die besonders für Fremdansteuerung geeignet ist. Wie bereits in der Fig.4 beschrieben wird bei Fremdansteuerung die Motorpumpeneinheit 10 alleine durch eine elektronische Steuereinheit 17 aktiviert, ohne dass die Kolbenstange 13 durch den Fahrer betätigt wird. Hierfür ist an der Hydraulikpassage 14 eine zweite Steuerkante 24 vorgesehen, die bei der unbetätigten Kolbenstange 13 die Hydraulikpassage 14 zwangsweise sperrt, dadurch das Abströmen des Volumenstromes aus dem Druckraum 5 in die Rücklaufkammer 6 verhindert und somit bei einer aktivierten Motorpumpeneinheit 10 einen Druckanstieg im Druckraum 5 sicherstellt.

Eine zweite Steuerkante 24 ist durch einen hauptbremszylinderseitigen Außenrand einer weiteren Querbohrung in der Kolbenstange 13 ausgebildet, die ebenfalls ein Bestandteil der Hydraulikpassage 14 ist und von der ersten Steuerkante 18 beziehungsweise der ihr zugeordneten Querbohrung axial in Richtung Hauptbremszylinder 7 versetzt angeordnet ist.

Für eine besonders leichte kundenspezifische Anpassung des Ansprechverhaltend und eine exakte Schaltbarkeit der Verstärkerstufe 2 ist in einer bevorzugten Ausführung eine gesonderte Steuerhülse 25 vorgesehen. Die Steuerhülse 25 umgreift radial die Kolbenstange 13 so dass die erste und die zweite Steuerkanten 18,24 jeweils zwischen der Kolbenstange 13 und der Steuerhülse 25 wirken. Damit einhergehend können die Schaltpunkte besonders exakt und mit einem minimierten herstelltechnischen Aufwand kundenspezifisch an unterschiedliche Bremsgeräte angepasst werden. Hierdurch ist es beispielsweise möglich, eine definierte Paarung Kolbenstange 13 mit Steuerhülse 25 in Kombination mit unterschiedlichen Verstärkerkolben 4 zu verwenden und so kostengünstig ein definiertes Ansprech- und Schaltverhalten bei verschiedenen kundenspezifischen Applikationen des Bremsgeräts 1 einzuhalten.

Vorzugsweise ist die Steuerhülse 25 aus einem verschleißfesten und maßhaltigen Werkstoff wie Metall gefertigt. Dadurch wird es möglich, den wesentlich größeren Verstärkerkolben 4 gewichtskosten- und herstelltechnisch optimiert aus einem leichten und gut einfach formbaren Werkstoff wie beispielsweise Kunststoff zu erzeugen. Die eine geringere bewegte Masse des Verstärkerkolbens 4 wird auch die Dynamik des Bremsgeräts 1 verbessert.

Durch die Ergänzung einer bereits in der Fig.3 beschriebenen Sensoreinrichtung 16 mit einem den Druck im Druckraum 5 überwachenden Drucksensor 30, der seine Signale ebenfalls an eine elektronische Steuereinheit 17 übermittelt, wird das erfindungsgemäße Bremsgerät 1 für autonomes Fahren geeignet.

Des Weiteren weist die gezeigte Ausführung des Bremsgeräts 1 eine an der Reaktionsscheibe 19 verstärkerkolbenseitig anliegende Führungsscheibe 43 auf. Die Führungsscheibe 43 in der gezeigten Ausgestaltung verfügt über eine axiale Durchgangsbohrung, in der das Übersetzungsstück 31 geführt ist und eine verstärkerkolbenseitig konische Kontur, die zu einer zwangsweisen radialen Zentrierung des Verstärkerkolbes 4 im Krafteingriff führt. Hierdurch wird insbesondere eine exakte Reproduzierbarkeit des Bremsdrucks als Ausgangssignal auf die vom Verstärkerkolben 4 ausgehende Verstärkungskraft als Eingangssignal unterstützt, was ein besonders anstrebenswertes Ziel beim automatisierten, autonomen Fahren darstellt.

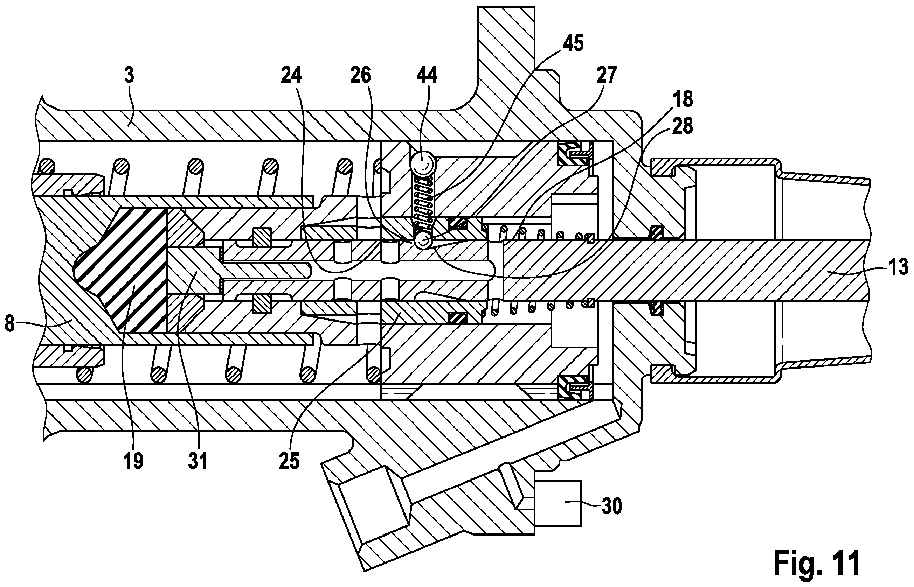

Insbesondere bei dynamischen Bremsvorgängen ist es notwendig, die relative Axialposition der Steuerhülse 25 festzuhalten. Hierfür zeigt die Ausführungsform nach Fig.11 eine Verriegelung 26, die zwischen dem Verstärkerkolben 4 und der Kolbenstange 13 durch die Steuerhülse 25 hindurch wirkt.

Die Verriegelung 26 ist mit einer Kugel 27 ausgeführt ist, die mit einer Druckfeder 45 belastet in eine radiale Ausnehmung 28 an der Kolbenstange 13 eingreift. Die Druckfeder 45 stützt sich radial außen gegen ein in den Verstärkerkolben 4 fest eingesetztes Stopfenelement 44.

Der Fahrer kann durch das Betätigen der Kolbenstange 13 die Verriegelung 22 jederzeit mechanisch und so in den Bremsvorgang eingreifen.

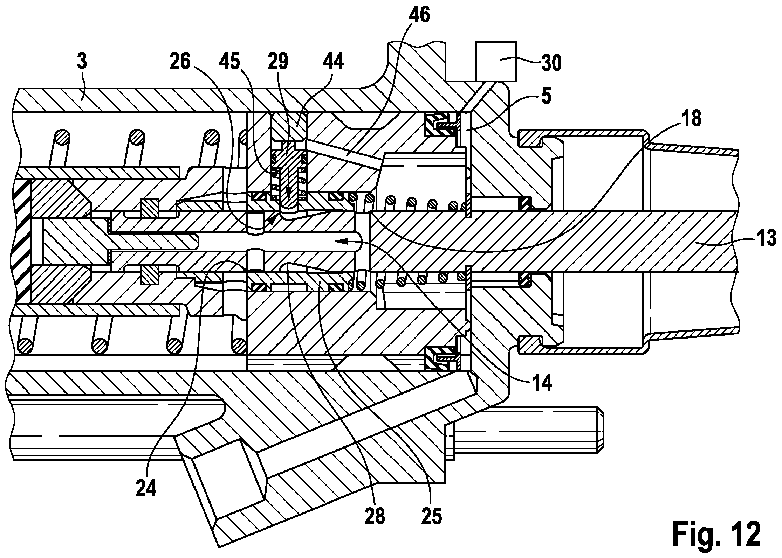

Fig.12 zeigt eine weitere Ausführung der Verriegelung 26, die gegenüber der vorstehend beschriebenen Ausführung für höhere bewegte Massen und dynamischere Bremsungen und ausgelegt ist.

Ein quer zur Kolbenstange 13 bewegbarer Arretierungskolben 29 ist in eine Querbohrung im Verstärkerkolben 4 eingesetzt und durch die Druckfeder 45, anders als bei der Variante nach Fig.11, in seiner entriegelten Position, gegen das Stopfenelement 44 gepresst. Steigt der hydraulische Druck im Druckraum 5, wird dieser durch den Druckkanal 46 an die radial äußere Wirkfläche des Arretierungskolben 29 übertragen und verschiebt den Arretierungskolben 29 gegen die Anpresskraft der Druckfeder 45 in die radiale Ausnehmung 28 an der Kolbenstange 13 und verriegelt die Kolbenstange 13 gegenüber dem Verstärkerkolben 4. Beim fahrerbetätigten Verschieben der Kolbenstange 13 bedingt die in der Kolbenstange 13 der Steuerkante 18 zugeordnete Querbohrung einen hydraulischen Kurzschluss und damit einen hydraulischen Druckgleichgewicht auf beiden Seiten des Arretierungskolbens 29, so dass dieser von der Druckfeder 40 automatisch in seine entriegelte Position verschoben wird.

### Bezugszeichen:

- 1: Bremsgerät
- 2: Verstärkerstufe
- 3: Verstärkergehäuse
- 4: Verstärkerkolben
- 5: Druckraum
- 6: Rücklaufkammer
- 7: Hauptbremszylinder
- 8: Druckkolben
- 9: Druckkammer
- 10: Motorpumpeneinheit
- 11: Druckmittelbehälter
- 12: Rücklaufverbindung
- 13: Kolbenstange
- 14: Hydraulikpassage
- 15: Bremspedal
- 16: Sensoreinrichtung
- 17: Elektronische Steuereinheit
- 18: Erste Steuerkante
- 19: Reaktionsscheibe
- 20: Sperrventil
- 21: Drosselstelle
- 22: Überströmeinrichtung
- 23: Ausnehmung
- 24: Zweite Steuerkante
- 25: Steuerhülse
- 26: Verriegelung
- 27: Kugel
- 28: Ausnehmung
- 29: Arretierungskolben
- 30: Drucksensor
- 31: Übersetzungsstück
- 32: Befestigungsbolzen
- 33: Radialdämpfer
- 34: Axialdämpfer
- 35: Hydraulikverbindung
- 36: Behälteranschluss
- 37: Bremskreisanschluss
- 38: Druckstück
- 39: Rückstellfeder
- 40: Federelement
- 41: Anschlagelement
- 42: Volumenstrom
- 43: Führungsscheibe
- 44: Stopfenelement
- 45: Druckfeder
- 46: Druckkanal

## Patentansprüche

1. Bremsgerät (1) für eine hydraulische Kraftfahrzeugbremsanlage, aufweisend:
- eine hydraulische Verstärkerstufe (2), mit einem Verstärkergehäuse (3), einem Verstärkerkolben (4), der im Verstärkergehäuse (3) verschiebbar gelagert ist und dabei einen Druckraum (5) von einer Rücklaufkammer (6) trennt, wobei der Druckraum (5) und die Rücklaufkammer (6) mit einem hydraulischen Druckmittel befüllt sind,
- einen Hauptbremszylinder (7) mit einem linear verschiebbaren Druckkolben (8), der in einer durch ihn begrenzten und mit Druckmittel befüllten Druckkammer (9) Bremsdruck erzeugt, wobei der Verstärkerkolben (4) den Druckkolben (8) mit einer Verstärkungskraft beaufschlägt, die vom Druck im Druckraum (5) resultiert,
- eine elektrisch angetriebene Motorpumpeneinheit (10), welche Druckmittel in den Druckraum (5) einspeist,
- einen Druckmittelbehälter (11) zur Versorgung der Motorpumpeneinheit (10) mit Druckmittel,
- eine Rücklaufverbindung (12), welche die Rücklaufkammer (6) mit dem Druckmittelbehälter (11) verbindet,
- eine Kolbenstange (13), die durch ein Bremspedal (15) betätigbar sowie durch den Verstärkerkolben (4) verschiebbar geführt ist und eine Hydraulikpassage (14) aufweist, welche in Abhängigkeit von einer axialen Relativposition zwischen der Kolbenstange (13) und Verstärkerkolben (4) eine hydraulische Verbindung zwischen der Rücklaufkammer (6) und dem Druckraum (5) ermöglicht,
- eine erste Steuerkante (18), welche im geöffneten Zustand die Verbindung zwischen der Hydraulikpassage (14) und dem Druckraum (5) erlaubt und im geschlossenen Zustand sperrt,
wobei die Verstärkerstufe (2) dergestalt nach einem Umlaufprinzip vorgesehen ist, dass im Bremsfall das Druckmittel zur Aufbau einer auf den Hauptbremszylinder (7) einwirkenden Verstärkungskraft unter Verzicht auf einen zwischengeschalteten Hochdruckspeicher unmittelbar von der Motorpumpeneinheit (10) der Verstärkerstufe (2) zugefügt wird, wobei eine Sensoreinrichtung (16) zur direkten oder indirekten Erfassung von Position und/oder Bewegung der Kolbenstange (13) vorgesehen ist, **gekennzeichnet durch**
eine elastische Reaktionsscheibe (19), die zwischen der Kolbenstange (13) und dem Druckkolben (8) angeordnet und bei Betätigung der Kolbenstange (13) durch das Bremspedal (15) unter Erzeugung einer Reaktionskraft komprimierbar ist,
und dass zwischen dem Verstärkerkolben (4) und der Kolbenstange (13) eine Verriegelung (26) vorgesehen ist, welche kraftgesteuert eine axiale Relativverschiebung des Verstärkerkolbens (4) gegenüber der Kolbenstange (13) verhindert und durch Betätigung der Kolbenstange (13) lösbar ausgebildet ist, indem die Verriegelung (26) mit einem durch einen Druck im Druckraum (5) gesteuerten, quer zur Kolbenstange (13) bewegten Arretierungskolben (29) oder mit einer federbelasteten Kugel (27) ausgeführt ist, welche in eine radiale Ausnehmung (28) an der Kolbenstange (13) eingreift.

2. Bremsgerät (1) nach Anspruch 1 **dadurch gekennzeichnet, dass** ein Sperrventil (20) vorgesehen ist, welches elektrisch angesteuert die Rücklaufverbindung (12) öffnet oder sperrt.

3. Bremsgerät (1) nach Anspruch 1 **dadurch gekennzeichnet, dass** der Hauptbremszylinder (7) als eine gesonderte Baugruppe lösbar am Verstärkergehäuse (3) befestigt ist.

4. Bremsgerät (1) nach Anspruch 1 **dadurch gekennzeichnet, dass** zwischen der Rücklaufkammer (6) und dem Druckmittelbehälter (11) eine Drosselstelle (21) angeordnet ist, die ab einer definierten Verschiebegeschwindigkeit des Verstärkerkolbens (4) einen Staudruck in der Rücklaufkammer (6) verursacht.

5. Bremsgerät (1) nach Anspruch 4 **dadurch gekennzeichnet, dass** die Drosselstelle (21) im Hauptbremszylinder (7) angeordnet ist.

6. Bremsgerät (1) nach Anspruch 1 **dadurch gekennzeichnet, dass** zwischen der Rücklaufkammer (6) und dem Druckraum (5) eine Überströmeinrichtung (22) vorgesehen ist, die bei einer definierten Druckdifferenz zwischen der Rücklaufkammer (6) und dem Druckraum (5) ein Volumentransfer des Druckmittels von der Rücklaufkammer (6) nach Druckraum (5) ermöglicht.

7. Bremsgerät (1) nach Anspruch 6 **dadurch gekennzeichnet, dass** die Überströmeinrichtung (22) als ein Dichtelement zwischen dem Verstärkerkolben (4) und dem Verstärkergehäuse (3) ausgeführt ist, das druckabhängig ein Volumentransfer von der Rücklaufkammer (6) nach Druckraum (5) ermöglicht.

8. Bremsgerät (1) nach Anspruch 6 **dadurch gekennzeichnet, dass** die Überströmeinrichtung (22) als ein federbelastetes Überdruckventil ausgeführt ist.

9. Bremsgerät (1) nach Anspruch 8 **dadurch gekennzeichnet, dass** das Überdruckventil in einer Bohrung (23) im Verstärkerkolben (4) angeordnet ist.

10. Bremsgerät (1) nach Anspruch 1 **dadurch gekennzeichnet, dass** der Hydraulikpassage (14) eine zweite Steuerkante (24) zugeordnet und derart von der ersten Steuerkante (18) in Richtung Hauptbremszylinder (7) versetzt positioniert ist, dass bei geschlossenen ersten Steuerkante (18) eine Verbindung zwischen der Hydraulikpassage (14) und der Rücklaufkammer (6) ermöglicht und bei geöffneten ersten Steuerkante (18) gesperrt werden kann.

11. Bremsgerät (1) nach Anspruch 1 **dadurch gekennzeichnet, dass** radial zwischen der Kolbenstange (13) und dem Verstärkerkolben (4) eine Steuerhülse (25) angeordnet ist, so dass die erste und die zweite Steuerkanten (18,24) jeweils zwischen der Kolbenstange (13) und der Steuerhülse (25) wirken.

12. Bremsgerät (1) nach Anspruch 1 **dadurch gekennzeichnet, dass** ein Drucksensor (30) vorgesehen ist, welcher den Druck im Druckraum (5) erfasst und diese Information an eine elektronische Steuereinheit (17) zur Ansteuerung der Motorpumpeneinheit (10) übermittelt.

13. Bremsgerät (1) nach Anspruch 1 **dadurch gekennzeichnet, dass** zwischen der Kolbenstange (13) und der Reaktionsscheibe (19) ein Übersetzungsstück (31) angeordnet ist, das die Reaktionskraft von der Reaktionsscheibe (19) in die Kolbenstange (13) einleitet.

## Claims

1. Brake device (1) for a hydraulic motor vehicle brake system, having:
- a hydraulic booster stage (2), having a booster housing (3), and a booster piston (4) which is mounted displaceably in the booster housing (3) and which, here, separates a pressure chamber (5) from a return chamber (6), wherein the pressure chamber (5) and the return chamber (6) are filled with a hydraulic pressure medium,
- a master brake cylinder (7) with a linearly displaceable pressure piston (8) which generates brake pressure in a pressure chamber (9) which is delimited by said pressure piston and which is filled with pressure medium, wherein the booster piston (4) acts on the pressure piston (8) with a boosting force which results from the pressure in the pressure chamber (5),
- an electrically driven motor-pump unit (10) which feeds pressure medium into the pressure chamber (5),
- a pressure medium reservoir (11) for the supply of pressure medium to the motor-pump unit (10),
- a return connection (12) which connects the return chamber (6) to the pressure medium reservoir (11),
- a piston rod (13) which is actuatable by means of a brake pedal (15) and which is guided in displaceable fashion by the booster piston (4) and which has a hydraulic passage (14) which, in a manner dependent on an axial relative position between the piston rod (13) and booster piston (4), permits a hydraulic connection between the return chamber (6) and the pressure chamber (5),
- a first control edge (18) which, in the open state, permits the connection between the hydraulic passage (14) and the pressure chamber (5) and, in the closed state, shuts off said connection,
wherein
the booster stage (2) is provided in accordance with a circulation principle such that, in a braking situation, the pressure medium is supplied by the motor-pump unit (10) directly, without an interposed high-pressure accumulator, to the booster stage (2) in order to build up a boosting force that acts on the master brake cylinder (7), wherein a sensor device (16) for the direct or indirect detection of position and/or movement of the piston rod (13) is provided, **characterized by** an elastic reaction disk (19), which is arranged between the piston rod (13) and the pressure piston (8) and which, when the piston rod (13) is actuated by means of the brake pedal (15), is compressible with generation of a reaction force,
and in that between the booster piston (4) and the piston rod (13), there is provided a locking means (26) which, in a force-controlled manner, prevents an axial relative displacement of the booster piston (4) relative to the piston rod (13) and is designed to be releasable by actuation of the piston rod (13), the locking means (26) being formed with an arresting piston (29) which is moved transversely with respect to the piston rod (13) and which is controlled by a pressure in pressure chamber (5), or being formed with a spring-loaded ball (27) which engages into a radial recess (28) on the piston rod (13).

2. Brake device (1) according to Claim 1, **characterized in that** a shut-off valve (20) is provided which, in an electrically actuated manner, opens or shuts off the return connection (12).

3. Brake device (1) according to Claim 1, **characterized in that** the master brake cylinder (7), as a separate assembly, is detachably fastened to the booster housing (3) .

4. Brake device (1) according to Claim 1, **characterized in that** a throttle point (21) is arranged between the return chamber (6) and the pressure medium reservoir (11), which throttle point gives rise to a back pressure in the return chamber (6) above a defined displacement speed of the booster piston (4).

5. Brake device (1) according to Claim 4, **characterized in that** the throttle point (21) is arranged in the master brake cylinder (7).

6. Brake device (1) according to Claim 1, **characterized in that,** between the return chamber (6) and the pressure chamber (5), there is provided an overflow device (22) which, in the presence of a defined pressure difference between the return chamber (6) and the pressure chamber (5), permits a volume transfer of the pressure medium from the return chamber (6) to the pressure chamber (5).

7. Brake device (1) according to Claim 6, **characterized in that** the overflow device (22) is designed as a sealing element between the booster piston (4) and the booster housing (3), which sealing element permits a volume transfer from the return chamber (6) to the pressure chamber (5) in a pressure-dependent manner.

8. Brake device (1) according to Claim 6, **characterized in that** the overflow device (22) is designed as a spring-loaded pressure relief valve.

9. Brake device (1) according to Claim 8, **characterized in that** the pressure relief valve is arranged in a bore (23) in the booster piston (4).

10. Brake device (1) according to Claim 1, **characterized in that** the hydraulic passage (14) is assigned a second control edge (24), and is positioned offset with respect to the first control edge (18) in the direction of the master brake cylinder (7) such that, when the first control edge (18) is closed, a connection between the hydraulic passage (14) and the return chamber (6) can be permitted, and when the first control edge (18) is opened, said connection can be shut off.

11. Brake device (1) according to Claim 1, **characterized in that** a control sleeve (25) is arranged radially between the piston rod (13) and the booster piston (4), such that the first and second control edges (18, 24) act in each case between the piston rod (13) and the control sleeve (25).

12. Brake device (1) according to Claim 1, **characterized in that** a pressure sensor (30) is provided which detects the pressure in the pressure chamber (5) and transmits this information to an electronic control unit (17) for actuating the motor-pump unit (10).

13. Brake device (1) according to Claim 1, **characterized in that,** between the piston rod (13) and the reaction disc (19), there is arranged a transmission piece (31) which introduces the reaction force from the reaction disc (19) into the piston rod (13).

## Revendications

1. Appareil de freinage (1) pour une installation hydraulique de frein de véhicule automobile, présentant :
- un étage amplificateur hydraulique (2) avec un boîtier d'amplificateur (3), un piston d'amplificateur (4) qui est supporté de manière déplaçable dans le boîtier d'amplificateur (3) et sépare ainsi un espace de pression (5) d'une chambre de retour (6), l'espace de pression (5) et la chambre de retour (6) étant remplis d'un fluide hydraulique sous pression,
- un cylindre de frein principal (7) avec un piston de pression (8) déplaçable linéairement, qui génère une pression de freinage dans une chambre de pression (9) limitée par lui et remplie de fluide sous pression, le piston d'amplificateur (4) sollicitant le piston de pression (8) avec une force d'amplification qui résulte de la pression dans l'espace de pression (5),
- une unité de pompe à moteur (10) à entraînement électrique, qui injecte du fluide sous pression dans l'espace de pression (5),
- un récipient de fluide sous pression (11) pour l'alimentation en fluide sous pression de l'unité de pompe à moteur (10),
- une liaison de retour (12) qui relie la chambre de retour (6) au récipient de fluide sous pression (11),
- une tige de piston (13) qui peut être actionnée par une pédale de frein (15) et qui est guidée de manière déplaçable par le piston d'amplificateur (4) et qui présente un passage hydraulique (14) qui, en fonction d'une position axiale relative entre la tige de piston (13) et le piston d'amplificateur (4), permet une liaison hydraulique entre la chambre de retour (6) et l'espace de pression (5),
- une première arête de commande (18) qui, dans l'état ouvert, permet la liaison entre le passage hydraulique (14) et l'espace de pression (5) et la bloque dans l'état fermé,
l'étage amplificateur (2) étant prévu selon un principe de circulation de telle sorte que dans le cas d'un freinage, le fluide sous pression soit ajouté directement par l'unité de pompe à moteur (10) à l'étage d'amplificateur (2) pour augmenter une force d'amplification agissant sur le cylindre de frein principal (7) en se passant d'un accumulateur haute pression interposé, un dispositif de capteur (16) pour la détection directe ou indirecte de la position et/ou du mouvement de la tige de piston (13) étant prévu,
**caractérisé par** un disque de réaction élastique (19) qui est disposé entre la tige de piston (13) et le piston de pression (8) et qui, lors de l'actionnement de la tige de piston (13) par la pédale de frein (15), peut être comprimé en générant une force de réaction,
et en ce qu'entre le piston d'amplificateur (4) et la tige de piston (13) est prévu un verrouillage (26) qui, sous la commande d'une force, empêche un déplacement axial relatif du piston d'amplificateur (4) par rapport à la tige de piston (13) et qui est réalisé de manière libérable par l'actionnement de la tige de piston (13), par le fait que le verrouillage (26) est réalisé avec un piston de blocage (29) commandé par une pression dans l'espace de pression (5), déplacé transversalement à la tige de piston (13) ou avec une bille sollicitée par ressort (27) qui s'engage dans un évidement radial (28) au niveau de la tige de piston (13).

2. Appareil de freinage (1) selon la revendication 1, **caractérisé en ce qu'**une soupape d'arrêt (20) est prévue, laquelle, par commande électrique, ouvre ou ferme la liaison de retour (12).

3. Appareil de freinage (1) selon la revendication 1, **caractérisé en ce que** le cylindre de frein principal (7) est fixé de manière détachable au boîtier d'amplificateur (3) en tant que module séparé.

4. Appareil de freinage (1) selon la revendication 1, **caractérisé en ce qu'**entre la chambre de retour (6) et le récipient de fluide sous pression (11) est disposé un point d'étranglement (21) qui, à partir d'une vitesse de déplacement définie du piston d'amplificateur (4), provoque une pression de compression dans la chambre de retour (6).

5. Appareil de freinage (1) selon la revendication 4, **caractérisé en ce que** le point d'étranglement (21) est disposé dans le cylindre de frein principal (7) .

6. Appareil de freinage (1) selon la revendication 1, **caractérisé en ce qu'**entre la chambre de retour (6) et l'espace de pression (5) est prévu un dispositif de trop-plein (22) qui, dans le cas d'une différence de pression définie entre la chambre de retour (6) et l'espace de pression (5), permet un transfert de volume du fluide sous pression de la chambre de retour (6) vers l'espace de pression (5).

7. Appareil de freinage (1) selon la revendication 6, **caractérisé en ce que** le dispositif de trop-plein (22) est réalisé sous forme d'élément d'étanchéité entre le piston d'amplificateur (4) et le boîtier d'amplificateur (3), lequel permet, en fonction de la pression, un transfert de volume de la chambre de retour (6) vers l'espace de pression (5).

8. Appareil de freinage (1) selon la revendication 6, **caractérisé en ce que** le dispositif de trop-plein (22) est réalisé sous forme de soupape de surpression sollicitée par ressort.

9. Appareil de freinage (1) selon la revendication 8, **caractérisé en ce que** la soupape de surpression est disposée dans un alésage (23) dans le piston d'amplificateur (4).

10. Appareil de freinage (1) selon la revendication 1, **caractérisé en ce qu'**une deuxième arête de commande (24) est associée au passage hydraulique (14) et est positionnée de manière décalée dans la direction du cylindre de frein principal (7) par rapport à la première arête de commande (18), de telle sorte que lorsque la première arête de commande (18) est fermée, une liaison entre le passage hydraulique (14) et la chambre de retour (6) soit permise et que lorsque la première arête de commande (18) est ouverte, cette liaison puisse être bloquée.

11. Appareil de freinage (1) selon la revendication 1, **caractérisé en ce qu'**un manchon de commande (25) est disposé radialement entre la tige de piston (13) et le piston d'amplificateur (4), de telle sorte que la première et la deuxième arête de commande (18, 24) agissent à chaque fois entre la tige de piston (13) et le manchon de commande (25) .

12. Appareil de freinage (1) selon la revendication 1, **caractérisé en ce qu'**un capteur de pression (30) est prévu, lequel détecte la pression dans l'espace de pression (5) et transmet cette information à une unité de commande électronique (17) pour piloter l'unité de pompe à moteur (10).

13. Appareil de freinage (1) selon la revendication 1, **caractérisé en ce qu'**entre la tige de piston (13) et le disque de réaction (19) est disposée une pièce de transfert (31) qui introduit la force de réaction du disque de réaction (19) dans la tige de piston (13).
